(19) Europäisches Patentamt / European Patent Office / Office européen des brevets

(11) **EP 4 449 902 A1**

(12) **EUROPEAN PATENT APPLICATION**
published in accordance with Art. 153(4) EPC

(43) Date of publication:
**23.10.2024 Bulletin 2024/43**

(21) Application number: **22907409.1**

(22) Date of filing: **12.12.2022**

(51) International Patent Classification (IPC):
**A24D 3/14** $^{(2006.01)}$

(52) Cooperative Patent Classification (CPC):
**A24D 3/14**

(86) International application number:
**PCT/JP2022/045636**

(87) International publication number:
**WO 2023/112885 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.12.2021 JP 2021201388**

(71) Applicant: **Japan Tobacco Inc.**
**Tokyo 105-6927 (JP)**

(72) Inventors:
• **INAGAKI, Michihiro**
  **Tokyo 130-8603 (JP)**
• **KUBOTA, Hiroyuki**
  **Tokyo 130-8603 (JP)**
• **Lin, Kuanhsuan**
  **Tokyo 130-8603 (JP)**

• **YANAGIMACHI, Miyuki**
  **Tokyo 130-8603 (JP)**
• **YAMADA, Yurika**
  **Tokyo 130-8603 (JP)**
• **AKAO, Takumi**
  **Tokyo 130-8603 (JP)**
• **SAKURAI, Toru**
  **Tokyo 130-8603 (JP)**
• **TSUTSUMI, Takeo**
  **Tokyo 130-8603 (JP)**
• **MANO, Tsukasa**
  **Tokyo 130-8603 (JP)**
• **KULKARNI, Pranav**
  **54294 Trier (DE)**
• **DA SILVA ROSA, Diego**
  **54294 Trier (DE)**

(74) Representative: **Hoffmann Eitle**
**Patent- und Rechtsanwälte PartmbB**
**Arabellastraße 30**
**81925 München (DE)**

(54) **FILTER TO WHICH GELLED ADDITIVE IS ADDED, FLAVOR INHALATION ARTICLE PROVIDED WITH SAID FILTER, AND FLAVOR INHALATION ARTICLE PACKAGE**

(57) A filter for a flavor inhalation article, the filter having a filtration material including a biodegradable ingredient, and a rolled paper wound around the filtration material, the filtration material containing a gelled additive having a phenol filtration function.

FIG. 1

## Description

Technical Field

The present invention relates to a filter containing a gelled additive added thereto, to a flavor inhalation article including the filter, and to a package of flavor inhalation articles.

Background Art

Smoking articles, such as filtered cigarettes, have conventionally often used an acetate fiber as a filter element. In recent years, from the standpoint of reducing the environmental impact, the use of a decomposable material as a filter element has been promoted for various types of products. Among them are smoking articles, and, accordingly, research is being conducted on using a biodegradable material, such as a paper filter, as the filter element. Unfortunately, paper filters have a lower filtration performance for stimulating components, such as phenols, than filters that use an acetate fiber and, therefore, tend to cause pungency in flavors. Correspondingly, attempts are being made to provide paper filters with an ability to filter stimulating components, such as phenols, thereby improving the flavor.

For example, Patent Document 1 discloses a filter containing a triacetin added to reduce phenols. Since filters containing a liquid added thereto are prone to leakage of the liquid during storage, a technique used in Patent Document 1 is to add cellulose acetate, thereby reducing the leakage.

Patent Document 2 reports that oil seepage into a filter element for smoking articles can be reduced by using a granular adsorbent in which granules containing an oil or fat in a granular base material, such as powdered sugar or crystalline cellulose, are aggregated via a polyol.

Patent Document 3 discloses a technique in which an additive that is solid at room temperature, such as a polyethylene glycol or a high molecular weight methoxypolyethylene glycol, is added to a filter to remove semi-volatile compounds, such as phenols.

Patent Document 4 reports on a technique in which a phenol scavenger having a dropping point of 50°C or greater is added to a filter to improve the flavor and reduce the leakage of liquid from the filter

Citation List

Patent Document

Patent Document 1: International Publication No. 2019/149742
Patent Document 2: International Publication No. 2018/008608
Patent Document 3: Japanese Unexamined Patent Application Publication (Translation of PCT Application) No. 2013-526272
Patent Document 4: International Publication No. 2021/001961

Summary of Invention

Technical Problem

Unfortunately, with the technique of Patent Document 1, the leakage of liquid during storage cannot be sufficiently prevented, and, consequently, the liquid may leak into wrapping paper and tipping paper from the filter.

In Patent Document 2, the use of a granular additive can inhibit the leakage of liquid, but there is room for improvement regarding the flavor that is provided to users in the instance in which the additive is used in flavor inhalation articles.

In Patent Document 3, since a solid additive is heated and melted after the solid additive is added to a filter material, uniform addition is difficult, and further, since the heating is performed after wrapping, operability is poor.

In Patent Document 4, a semi-solid additive is employed, but the addition to a filter is performed in a state in which the additive has been melted or fluidized by being heated. As a result, the additive may seep into the wrapper during the period from when the additive is added to the filter to when the additive is solidified, and it is desirable that this problem be solved. Furthermore, the flavor has room for improvement although it is adequate for practical applications.

Accordingly, there is a need to achieve both an effect of inhibiting the leakage of liquid and an effect of improving the flavor and to make a further improvement in these effects.

An object of the present invention is to provide a filter for flavor inhalation articles that is capable of sufficiently filtering phenols to improve the flavor and is not prone to leakage of liquid during storage.

Solution to Problem

The present inventors diligently conducted studies to solve the above-described problems and, consequently, discovered that by using a gelled additive that serves as an additive having a phenol filtration capacity, it is possible to sufficiently filter phenols, thereby improving the flavor, and to inhibit leakage of liquid attributable to the additive from occurring even after storage. Accordingly, the present invention was completed. Specifically, a summary of the present invention is as follows.

[1] A filter for a flavor inhalation article, the filter comprising:

    a filter element including a biodegradable material; and
    a wrapper that wraps the filter element, wherein
    the filter element contains a gelled additive having a phenol filtration capacity.

[2] The filter according to [1], wherein

    the gelled additive having a phenol filtration capacity contains at least two compounds selected from the group consisting of polyethylene glycols, polypropylene glycols, polybutylene glycols, polyethylene glycol sorbitan fatty acid esters, polypropylene glycol glyceryl ethers, polyglycerine fatty acid esters, propylene glycol, diglycerine, caprylyl glycol, propylene glycol fatty acid esters, glycerine fatty acid esters, sorbitan fatty acid esters, sucrose fatty acid esters, triethyl citrate, fatty acids, fatty acid alkyl esters, phospholipids, hydroxy fatty acids, and hydrogenated rapeseed oils, and
    at least one of the at least two compounds is a component having a phenol filtration capacity selected from the group consisting of polyethylene glycols, polypropylene glycols, polybutylene glycols, polyethylene glycol sorbitan fatty acid esters, polypropylene glycol glyceryl ethers, polyglycerine fatty acid esters, propylene glycol, diglycerine, caprylyl glycol, propylene glycol fatty acid esters, glycerine fatty acid esters, sorbitan fatty acid esters, sucrose fatty acid esters, triethyl citrate, fatty acids, fatty acid alkyl esters, and phospholipids.

[3] The filter according to [2], wherein the polypropylene glycols have a weight average molecular weight of 2,000 or greater and 4,000 or less, and the polypropylene glycol glyceryl ethers have a weight average molecular weight of 3,000 or greater and 4,000 or less.

[4] The filter according to [2], wherein the component having a phenol filtration capacity is at least one selected from the group consisting of the polypropylene glycol glyceryl ethers, the polyglycerine fatty acid esters, the glycerine fatty acid esters, the fatty acids, and the fatty acid alkyl esters.

[5] The filter according to any one of [1] to [4], wherein the wrapper includes a liquid-repellent layer in a region that is in contact with the filter element.

[6] The filter according to [5], wherein a spread area of the component having a phenol filtration capacity, which is a spread area on the liquid-repellent layer, is less than or equal to 35 mm$^2$.

[7] The filter according to [5] or [6], wherein the wrapper further includes a substrate, and the liquid-repellent layer is disposed on a surface of the substrate.

[8] The filter according to any one of [5] to [7], wherein the liquid-repellent layer includes at least one selected from the group consisting of starches, polyvinyl alcohols, acrylic resins, fluororesins, aluminum, polypropylenes, polyethylenes, paraffins, silicones, cellulose nanofibers, ethyl cellulose, gum arabic, and nitrocellulose.

[9] The filter according to any one of [5] to [7], wherein the liquid-repellent layer includes at least one selected from the group consisting of ethyl cellulose, acrylic resins, paraffins, polyethylenes, polypropylenes, fluororesins, and silicones.

[10] The filter according to any one of [5] to [7], wherein the liquid-repellent layer is liquid-repellent paper.

[11] The filter according to any one of [1] to [10], wherein the filter has a phenol filtration capacity of less than or equal to 0.83 as determined by equation (i):

$$\text{phenol filtration capacity} = DPR1/DPR0 \qquad (i)$$

    where DPR1 is a value obtained by dividing an amount of a phenol present in tobacco smoke that passes through the filter by an amount of particulate matter present in the tobacco smoke that passes through the filter, the tobacco smoke being a tobacco smoke in a smoking test performed with the filter, and

DPRO is a value obtained by dividing an amount of a phenol present in tobacco smoke that passes through a reference filter by an amount of particulate matter present in the tobacco smoke that passes through the reference filter, the tobacco smoke being a tobacco smoke in a smoking test performed with the reference filter, the reference filter having the same configuration as the filter except that the reference filter does not include the gelled additive having a phenol filtration capacity.

[12] A flavor inhalation article comprising:

a tobacco rod wrapped with wrapping paper;
the filter according to any one of [1] to [11]; and
tipping paper connecting the tobacco rod to the filter

[13] The flavor inhalation article according to [12], wherein at least one of the wrapping paper and the tipping paper includes a colored portion.

[14] A package of flavor inhalation articles in which the flavor inhalation articles are enclosed in an enclosing wrapper, wherein

the flavor inhalation articles are identical to the flavor inhalation article according to [12] or [13],
the flavor inhalation articles are wrapped directly in the enclosing wrapper, and
the enclosing wrapper includes a liquid-repellent layer provided at least in a region that is in contact with the filter

[15] The package of flavor inhalation articles according to [14], wherein the liquid-repellent layer provided on the enclosing wrapper includes at least one selected from the group consisting of starches, polyvinyl alcohols, acrylic resins, fluororesins, aluminum, polypropylenes, polyethylenes, paraffins, silicones, cellulose nanofibers, ethyl cellulose, gum arabic, and nitrocellulose.

[16] The package of flavor inhalation articles according to [14], wherein the liquid-repellent layer provided on the enclosing wrapper includes at least one selected from the group consisting of ethyl cellulose, acrylic resins, paraffins, polyethylenes, polypropylenes, fluororesins, and silicones.

[17] The package of flavor inhalation articles according to [14], wherein the liquid-repellent layer provided on the enclosing wrapper is liquid-repellent paper.

Advantageous Effects of Invention

The present invention can provide a filter for flavor inhalation articles that is capable of sufficiently filtering phenols, thereby improving the flavor, and which is not prone to leakage of liquid during storage.

Brief Description of Drawings

[Fig. 1] Fig. 1 is a schematic diagram illustrating a first configuration example of a flavor inhalation article according to a second embodiment of the present invention.

[Fig. 2] Fig. 2 is a schematic diagram illustrating a second configuration example of the flavor inhalation article according to the second embodiment of the present invention.

[Fig. 3] Fig. 3 is a schematic diagram illustrating a third configuration example of the flavor inhalation article according to the second embodiment of the present invention.

[Fig. 4] Fig. 4 is a graph showing a spread area of a polypropylene glycol glyceryl ether (PPG-GE) on various test materials.

[Fig. 5] Fig. 5 is a graph showing the spread area of a diglycerine on the various test materials.

[Fig. 6] Fig. 6 is a graph showing a phenol filtration capacity of cigarette samples prepared in Examples.

[Fig. 7] Fig. 7 is a graph showing a relationship between the phenol filtration capacity of the cigarette samples prepared in the Examples and sensory evaluation scores for the flavor thereof.

Description of Embodiments

The present invention will be described in detail below with reference to embodiments, illustrative examples, and the like. It should be noted that the present invention is not limited to the embodiments, the illustrative examples, and the like described below and may be implemented with any modifications made without departing from the spirit of the present invention.

In this specification, when "to" is used to express a range of values or physical property values, the range includes the numbers preceding and following "to". Furthermore, when lower limits and upper limits of a numerical range are separately recited, the numerical range may be defined by a combination of any of the lower limits and any of the upper limits.

1. Filter

A first embodiment of the present invention is a filter for a flavor inhalation article. The filter includes a filter element, which includes a biodegradable material, and a wrapper that wraps the filter element. The filter element contains a gelled additive having a phenol filtration capacity.

1-1. Form and Shape of Filter

The filter may be provided in any form, and examples of the filter include plain filters that include a single filter segment; and multi-segment filters that include multiple filter segments, such as dual filters and triple filters. When the filter of the present embodiment is a multi-segment filter, it is sufficient that at least one of the filter segments include the filter element containing a gelled additive added thereto.

With the filter of the present embodiment, it is possible to sufficiently improve the flavor and inhibit the leakage of liquid even if the filter is formed of a single filter segment.

The filter may have any shape, examples of which include shapes known in the art. Typically, the shape may be a cylindrical shape, which may be in the form described below.

Furthermore, the filter may be provided with sections such as a cavity and a recess that have a circumferential cross section that is hollow (a space).

A shape of a cross section taken in a direction perpendicular to a longitudinal axis of the filter is substantially circular. A diameter of the circle may be appropriately changed to suit a size of a product. The diameter is typically greater than or equal to 4.0 mm, preferably greater than or equal to 4.5 mm, and more preferably greater than or equal to 5.0 mm. The diameter is typically less than or equal to 9.0 mm, preferably less than or equal to 8.5 mm, and more preferably less than or equal to 8.0 mm. If the cross section is not circular, a circle having the same area as the cross section is defined, and the diameter of the cross section is determined as the diameter of the circle.

A length of the circumference of the cross section taken in the direction perpendicular to the longitudinal axis of the filter may be appropriately changed to suit the size of the product in which the filter is to be used. The length is typically greater than or equal to 14.0 mm, preferably greater than or equal to 15.0 mm, and more preferably greater than or equal to 16.0 mm. The length this typically less than or equal to 27.0 mm, preferably less than or equal to 26.0 mm, and more preferably less than or equal to 25.0 mm.

The length of the filter in the longitudinal axial direction may be appropriately changed to suit the size of the product. The length may be greater than or equal to 5 mm, greater than or equal to 10 mm, greater than or equal to 15 mm, greater than or equal to 17.5 mm, or greater than or equal to 20.0 mm and may be less than or equal to 40 mm, less than or equal to 35 mm, less than or equal to 32.5 mm, or less than or equal to 30.0 mm.

The filter may have any draw resistance per 120 mm in the axial direction. The draw resistance is typically greater than or equal to 100 mm $H_2O$, preferably greater than or equal to 150 mm $H_2O$, and more preferably greater than or equal to 200 mm $H_2O$. The draw resistance is typically less than or equal to 800 mm $H_2O$, preferably less than or equal to 700 mm $H_2O$, and more preferably less than or equal to 600 mm $H_2O$.

The draw resistance of the filter is measured in accordance with an ISO standard method (ISO 6565) by using, for example, a filter draw resistance measuring device manufactured by Cerulean. The draw resistance of the filter is a pressure difference created between a first end surface and a second end surface when a predetermined air flow rate (17.5 mL/s) of air is emitted from one end surface (first end surface) to another end surface (second end surface) in a state in which permeation of air through the side surface of the filter does not occur. The draw resistance is typically expressed in units of mm $H_2O$. It is known that a relationship between the draw resistance of the filter and the length of the filter is a proportional relationship, regarding a typically used length range (lengths of 5 mm to 200 mm). That is, if the length is doubled, the draw resistance of the filter is doubled.

1-2. Filter Element

The filter of the present embodiment includes a filter element including a biodegradable material. Since biodegradable materials are decomposed by microorganisms, the materials have little environmental impact. Examples of biodegradable materials include cellulose, polylactic acids, poly(3-hydroxybutyrate-co-3-hydroxyhexanoate), polylactic acid-polycaprolactone copolymers, polyglycolic acids, polylactic acid-polyether copolymers, butanediol-long-chain dicarboxylic acid copolymers, polybutylene adipate terephthalate, polytetramethylene adipate terephthalate, polyethylene terephthalate succinate, polybutylene succinate, polybutylene succinate adipate, and polyvinyl alcohols. In particular, cellulose is preferable. Filters that use a filter element including a cellulose are sometimes called "paper filters".

The filter element including a cellulose is typically paper formed from wood pulp. The wood pulp may be of any type and may be pulp of wood such as a conifer or a hardwood. Furthermore, the paper used in the filter may be of any type and may be gathered paper, pleated paper, crimped paper, crepe paper, nonwoven fabrics, and shredded paper. The paper may be made by a wet process or a dry process. Either of them may be selected and used.

Note that paper filters have a feature of being easily biodegradable compared with tows of a synthetic fiber, such as a cellulose acetate tow.

The filter element may be provided in any form. The filter element may be in the form of fibrous pieces of a filter element assembled together or in the form of sheet-shaped pieces of a filter element assembled together. In particular, in the case of a paper filter, the filter may be, for example, in the form of pieces of paper having a creped structure assembled together, with the creped structure having multiple valleys and ridges. In the instance where paper having a creped structure is used, the paper is to be positioned such that a lengthwise direction of the valleys (or ridges) is parallel to a longitudinal axial direction of the filter rod.

In the instance where paper having such a creped structure is used as the paper of the filter element that constitutes the paper filter, adjacent valleys or adjacent ridges in the crepe of the paper filter may have any average distance therebetween. Typically, the average distance is greater than or equal to 0.5 mm, and preferably, greater than or equal to 1.0 mm. Typically, the average distance is less than or equal to 5.0 mm, and preferably, less than or equal to 4.0 mm.

Furthermore, the valleys in the crepe of the paper filter may have any average depth. Typically, the average depth is greater than or equal to 0.1 mm, and preferably, greater than or equal to 0.2 mm. Typically, the average depth is less than or equal to 1.2 mm, and preferably, less than or equal to 10 mm.

The paper having a creped structure can be prepared by performing a creping process that forms peak portions and valley portions on a flat, non-creped material sheet.

The material sheet may have any thickness. The thickness is typically greater than or equal to 20 $\mu$m, preferably greater than or equal to 25 $\mu$m, and more preferably greater than or equal to 30 $\mu$m and is typically less than or equal to 140 $\mu$m, preferably less than or equal to 130 $\mu$m, and more preferably less than or equal to 120 $\mu$m.

The material sheet may have any basis weight. The basis weight is typically greater than or equal to 20 gsm and preferably greater than or equal to 25 gsm and is typically less than or equal to 120 gsm, preferably less than or equal to 80 gsm, and more preferably less than or equal to 45 gsm.

Note that the basis weight can be adjusted by adjusting a content of the pulp and a content of a filler or by adjusting process conditions for a wet paper machine.

The material sheet may have any width. The width is typically greater than or equal to 50 mm, preferably greater than or equal to 100 mm, and more preferably greater than or equal to 170 mm and is less than or equal to 300 mm, preferably less than or equal to 250 mm, and more preferably less than or equal to 230 mm. The "width" of the material sheet is a length in a direction perpendicular to the longitudinal axial direction in which the peak portions and the valley portions are continuously disposed in the paper having a creped structure. In other words, the width is a length in a direction perpendicular to a direction corresponding to the longitudinal axial direction of the filter element resulting from the processing of the paper having a creped structure.

1-3. Gelled Additive Having Phenol Filtration Capacity

The filter element of the present embodiment contains a gelled additive having a phenol filtration capacity (hereinafter also referred to simply as a "gelled additive"). The addition of the gelled additive to the filter element enables favorable inhibition of the leakage of liquid, compared with the instance in which the additive having a phenol filtration capacity is a liquid. Furthermore, the inclusion of the gelled additive in the filter element enables the removal of phenols from smoke, aerosol, and the like passing through the filter and, consequently, can improve the flavor.

In this specification, the term "gelled" refers to a state in which the system as a whole exhibits properties of a solid as a result of the formation of a three-dimensional network structure, which causes high viscosity and loss of fluidity. Since intermolecular interactions act between components, the state in which each of the components has lost fluidity can be maintained.

The gelled additive may be any material that is in a gelled form and has a phenol filtration capacity. Preferably, the gelled additive is a material that satisfies the following (I) and (II).

(I): The gelled additive contains at least two compounds (hereinafter also referred to as "components (A)") selected from the group consisting of polyethylene glycols, polypropylene glycols, polybutylene glycols, polyethylene glycol sorbitan fatty acid esters, polypropylene glycol glyceryl ethers, polyglycerine fatty acid esters, propylene glycol, diglycerine, caprylyl glycol, propylene glycol fatty acid esters, glycerine fatty acid esters, sorbitan fatty acid esters, sucrose fatty acid esters, triethyl citrate, fatty acids, fatty acid alkyl esters, phospholipids, hydroxy fatty acids, and hydrogenated rapeseed oils.

(II): At least one of the components (A) is a component having a phenol filtration capacity selected from the group consisting of polyethylene glycols, polypropylene glycols, polybutylene glycols, polyethylene glycol sorbitan fatty acid esters, polypropylene glycol glyceryl ethers, polyglycerine fatty acid esters, propylene glycol, diglycerine, caprylyl glycol, propylene glycol fatty acid esters, glycerine fatty acid esters, sorbitan fatty acid esters, sucrose fatty acid esters, triethyl citrate, fatty acids, fatty acid alkyl esters, and phospholipids.

The polyethylene glycols, the polypropylene glycols, the polybutylene glycols, the polyethylene glycol sorbitan fatty acid esters, the polypropylene glycol glyceryl ethers, and the polyglycerine fatty acid esters may have any weight average molecular weight (Mw). For example, the weight average molecular weight (Mw) may be greater than or equal to 500 and may be less than or equal to 100,000. The weight average molecular weight of the polypropylene glycols and the polypropylene glycol glyceryl ethers may be greater than or equal to 1,000 and may be less than or equal to 10,000; these are preferable from the standpoint of achieving inhibition of ink elimination, which will be described later. The weight average molecular weight is more preferably greater than or equal to 2,000 and even more preferably greater than or equal to 3,000 and is more preferably less than or equal to 7,000 and even more preferably less than or equal to 4,000.

The fatty acid moiety of the polyethylene glycol sorbitan fatty acid esters, the polyglycerine fatty acid esters, the propylene glycol fatty acid esters, the glycerine fatty acid esters, the sorbitan fatty acid esters, and the sucrose fatty acid esters may be, for example, the same as or similar to that of the later-described fatty acids. It is preferable that the fatty acid moiety be a saturated fatty acid. A reason for this is as follows. Saturated fatty acid esters are unlikely to produce a foul smell associated with aging-related decomposition even if an antioxidant, such as vitamin E, is not added. Accordingly, saturated fatty acid esters are less likely to have an adverse effect on the quality and flavor than unsaturated fatty acid esters. Preferred examples of the saturated fatty acid esters are glycerine fatty acid esters, such as triacetins and glycerine behenate.

The number of fatty acid ester linkages per molecule may be any number and may be such that two or more hydroxy groups remain, one hydroxy group remains, or all the hydroxy groups are fatty-acid-esterified, in the molecule.

The fatty acids may be straight chain fatty acids or branched fatty acids and may be saturated fatty acids or unsaturated fatty acids. The fatty acids may have any number of carbon atoms. The number of carbon atoms is typically greater than or equal to 2, preferably greater than or equal to 8, and more preferably greater than or equal to 12 and is typically less than or equal to 30, preferably less than or equal to 26, and more preferably less than or equal to 22.

Specific examples of the fatty acids include acetic acid, lauric acid, myristic acid, palmitic acid, stearic acid, behenic acid, undecenoic acid, palmitoleic acid, oleic acid, linoleic acid, linolenic acid, docosahexaenoic acid, and eicosapentaenoic acid.

The fatty acid moiety of the fatty acid alkyl esters may be, for example, the same as or similar to that of the above-described fatty acids. For the reason described above, it is preferable that the fatty acid moiety be a saturated fatty acid. The alkyl group of the fatty acid alkyl esters may be a straight chain alkyl group or a branched alkyl group. The number of carbon atoms of the alkyl group is typically greater than or equal to 1 and preferably greater than or equal to 2 and is typically less than or equal to 12, preferably less than or equal to 8, and more preferably less than or equal to 4. Examples of the alkyl groups include methyl groups, ethyl groups, n-propyl groups, isopropyl groups, n-butyl groups, sec-butyl groups, tert-butyl groups, n-pentyl groups, neopentyl groups, n-hexyl groups, n-heptyl groups, n-octyl groups, n-nonyl groups, n-decyl groups, n-undecyl groups, and n-dodecyl groups.

Examples of the hydroxy fatty acids include fatty acids corresponding to any of the above-mentioned fatty acids and containing a hydroxy group substituted at a carbon atom of the aliphatic hydrocarbon group. The hydroxy group may be substituted at any position and may be present in any number. A preferred example of the hydroxy fatty acids is 12-hydroxystearic acid, in which a hydroxy group is substituted at the carbon atom at position 12 of the stearic acid.

The phospholipids may have at least one ester linkage and/or ether linkage per molecule. This is preferable from the standpoint of achieving a high phenol filtration capacity. More preferably, the phospholipids may have two or more ester linkages and/or ether linkages. The number of the linkages of the phospholipids may have any upper limit. The upper limit is typically 10 or less or may be 8 or less, 6 or less, or 4 or less.

Specific examples of the phospholipids include lecithin, and particular examples thereof include soybean lecithin and egg lecithin.

The component having a phenol filtration capacity may be at least one selected from the group consisting of polypropylene glycol glyceryl ethers, polyglycerine fatty acid esters, glycerine fatty acid esters, fatty acids, and fatty acid alkyl esters. These, among others, have a high phenol filtration capacity and are, therefore, preferable.

In a preferred mode of the present embodiment, the component having a phenol filtration capacity is per se a liquid under conditions of atmospheric pressure and 25°C (hereinafter, the component having a phenol filtration capacity that is a liquid under conditions of atmospheric pressure and 25°C may be referred to as a "liquid having a phenol filtration capacity").

At least one of the at least two components (A) may be a component having a phenol filtration capacity, or all of the components (A) may be components having a phenol filtration capacity.

In the present embodiment, it is preferable that at least one of the at least two components (A) be a compound that acts as a gelling agent to cause gelation of the other or others of the components (A). That is, it is preferable that the at least two components (A) be substances that have a high affinity and produce intermolecular interactions, such as hydrogen bonding, van der Waals forces, electrostatic interactions, and $\pi$-$\pi$ interactions. Such intermolecular interactions cause molecules to associate with one another to form a three-dimensional network structure, thereby causing gelation. As a result, it becomes possible to inhibit the leakage of liquid. Examples of such combinations of components (A) include combinations of an oxyalkylene polymer and a component that melts when heated (e.g., a component with a melting point of approximately 50°C to 100°C). Examples of the former include polyethylene glycols, polypropylene glycols, polybutylene glycols, polyethylene glycol sorbitan fatty acid esters, polypropylene glycol glyceryl ethers, polyglycerine fatty acid esters, propylene glycol fatty acid esters, and glycerine fatty acid esters. Examples of the latter include stearic acid, myristic acid, 12-hydroxystearic acid, and hydrogenated rapeseed oils. It is also preferable to use a component that is used as a thickening agent or a gelling agent, in combination with an oil. Examples of the component include glycerine fatty acid esters such as glycerine behenate; and polyglycerine fatty acid esters such as polyglycerine octastearate. Examples of the oil include glycerine fatty acid esters, fatty acids, and fatty acid esters.

The components having a phenol filtration capacity mentioned above as examples not only have a high phenol filtration capacity but also are able to remove specific components that inhibit or degrade the flavor. Examples of the specific components include phenols other than phenols such as o-cresol, m-cresol, and p-cresol; pyridines; pyrazines; quinolines; and styrenes. Accordingly, the components are preferable also because they can further improve the flavor.

In the present embodiment, the use of the gelled additive having a phenol filtration capacity as an additive for removing phenols makes it possible to reduce the leakage of liquid from the filter element; however, in some cases, a small amount of liquid leaks from the three-dimensional network structure of the gelled additive during storage. Even in such instances, the possibility that liquid leaks from the filter element is lower than in instances in which the additive having a phenol filtration capacity is a liquid This is because the amount of liquid that leaks from the gelled additive is small. Still, as will be detailed in the section " 1-5. Wrapper", the leakage of liquid from the filter element can be prevented more effectively by providing a liquid-repellent layer in a region of the wrapper that wraps the filter element, which is a region that is in contact with the filter element, even if the gelled additive leaks during storage. In this instance, since the liquid that leaks from the gelled additive is mainly a liquid component (liquid having a phenol filtration capacity), among the components having a phenol filtration capacity, it is preferable, when the component having a phenol filtration capacity is a liquid, that the combination of the component having a phenol filtration capacity and the liquid-repellent layer be a combination with which a spread area of the component having a phenol filtration capacity, which is a spread area on the liquid-repellent layer (hereinafter also referred to simply as a "spread area"), can be made to be less than or equal to 35 mm$^2$. The spread area may have any lower limit. The lower limit is typically 5 mm$^2$ or greater or may be 10 mm$^2$ or greater. When the spread area is within either of the mentioned ranges, diffusion of liquid through the surface of the wrapper is inhibited even if the component having a phenol filtration capacity is a liquid, and, consequently, the leakage of the liquid from an end of the wrapper can be inhibited.

The spread area of the component having a phenol filtration capacity, which is a spread area on the liquid-repellent layer, is measured in the following manner. First, 10 mg of the component having a phenol filtration capacity is dropped with a microsyringe onto the liquid-repellent layer, and the resultant is allowed to stand in a room at a temperature of 22°C and a humidity of 60% RH for 30 minutes. Subsequently, the component having a phenol filtration capacity that has spread on the liquid-repellent layer is observed with a microscope, which may be, for example, a VHX-100 digital microscope, manufactured by Keyence Corporation. In the images obtained from the observation with the microscope, the outer periphery of the component having a phenol filtration capacity is manually identified, and an area of the region surrounded by the identified outer periphery is calculated as the spread area.

The component having a phenol filtration capacity may be present in any total content. The total amount is typically greater than or equal to 2 wt.%, preferably greater than or equal to 50 wt.%, more preferably greater than or equal to 65 wt.%, even more preferably greater than or equal to 75 wt.%, particularly preferably greater than or equal to 80 wt.%, and most preferably greater than or equal to 85 wt.% and is typically less than or equal to 100 wt.%, more preferably less than or equal to 98 wt.%, and even more preferably less than or equal to 95 wt.%.

A total content of the gelled additive based on a total weight of the filter, including the filter element and the wrapper, is preferably greater than or equal to 1 mg, more preferably greater than or equal to 5 mg, and even more preferably greater than or equal to 10 mg and is preferably less than or equal to 250 mg, more preferably less than or equal to 50 mg, and even more preferably less than or equal to 30 mg. When the content of the gelled additive is within any of the above-mentioned ranges, specific components present in smoke, aerosol, and the like can be sufficiently removed to improve the flavor. Furthermore, when the content of the gelled additive is within any of the above-mentioned ranges, it is possible to avoid problems such as significant changes in the draw resistance of the filter, a significant reduction in manufacturability for the filter, and leakage of liquid from the filter that may occur if a pressure is applied to the filter.

The gelled additive may contain one or more additives known in the art, such as a thickening agent, a flavoring agent, and a coloring agent. The gelled additive may contain impurities, such as water, to the extent that they do not hinder the effects of the present invention. Among additives known in the art, thickening agents are preferable because they can prevent the leakage of liquid attributable to the gelled additive and enhance an effect of maintaining a good appearance.

The thickening agents may be any materials as long as they can be retained in the gelled additive. Examples of the thickening agents include xanthan gums, gellan gums, psyllium seed gums, pectins, carboxymethyl cellulose, hydroxypropyl cellulose, polyvinyl alcohols, agaroses, pullulans, alginic acids, polyacrylic acids, urethane compounds, and alkali metal salts or alkaline earth metal salts thereof. Among these, carboxymethyl cellulose is the preferred thickening agent.

A content of the thickening agent in the filter element is, for example, 0.5 mg/filter or greater and 200 mg/filter or less, depending on the type of the thickening agent. In an exemplary mode, when the thickening agent is a carboxymethyl cellulose, the content per filter may be 10 mg/filter or greater and 150 mg/filter or less.

1-4. Other Additives

The filter element may include not only a biodegradable material and the gelled additive but also a crushable additive-release container (also referred to as a "capsule" in the art) including a crushable outer shell made of activated carbon, gelatin, or the like. When the capsule is broken by the user of the flavor inhalation article before use, during use, or after use, the capsule releases the additive contained in the capsule. The additive is then partially or wholly transferred to the air stream passing through the flavor inhalation article, during the time in which the flavor inhalation article is being used, and then, after use, the additive is transferred to the filter element.

The capsule may be provided in any form and, for example, may be an easily breakable capsule. Preferably, the capsule has a spherical shape. The capsule may contain any one or more additives, preferred examples of which include flavoring agents and activated carbon. The additives may be provided in any form and are typically liquid or solid. The additive may include the gelled additive. The use of a capsule containing an additive is well known in the art. Easily breakable capsules and method for manufacturing such capsules are well known in the art. The flavoring agent and activated carbon may be those known in the art.

1-5. Wrapper

The filter of the present embodiment includes a wrapper that wraps the filter element. When the filter is a multi-segment filter, it is preferable that the wrapper collectively wrap the two or more segments. When the two or more segments are to be separately wrapped with the wrapper, the filter segments may be secured to one another with forming paper. The forming paper may be made of any material and may have any thickness, weighing amount, and the like. The forming paper may be paper similar to the wrapper.

The wrapper may be provided in any form and may include one or more seams including an adhesive. The adhesive may include a hot melt adhesive. The adhesive can include a polyvinyl alcohol.

The wrapper may be made of any material, which may be a material known in the art. The wrapper may contain a filler and the like, such as calcium carbonate.

The wrapper may have any thickness. The thickness is typically greater than or equal to 20 $\mu$m and preferably greater than or equal to 30 $\mu$m and is typically less than or equal to 140 $\mu$m, preferably less than or equal to 130 $\mu$m, and more preferably less than or equal to 120 $\mu$m.

The wrapper may have any basis weight. The basis weight is typically greater than or equal to 20 gsm, preferably greater than or equal to 22 gsm, and more preferably greater than or equal to 23 gsm and is typically less than or equal to 100 gsm, preferably less than or equal to 95 gsm, and more preferably less than or equal to 90 gsm.

Preferably, the wrapper of the present embodiment includes a liquid-repellent layer in a region that is in contact with the filter element. The liquid-repellent layer is a layer that is repellent to liquids derived from the gelled additive, in particular, to liquid components among the components having a phenol filtration capacity (liquids having a phenol filtration capacity). Thus, in the instance where a liquid-repellent layer is provided at a specific position of the wrapper, liquid that has leaked from the gelled additive during storage can be inhibited from diffusing through the surface of the wrapper, and, consequently, the leakage of the liquid from an end of the wrapper can be inhibited.

The wrapper may be formed of only the liquid-repellent layer or may include a substrate and the liquid-repellent layer disposed on a surface of the substrate. In the instance where the wrapper includes a substrate and the liquid-repellent layer disposed on a surface of the substrate, the wrapper may be, as will be described later, one in which a layer of a coating material including a liquid-repellent-layer-forming material has been applied to the surface of the substrate by means of coating, vapor deposition, or the like. The substrate may be any material, examples of which include paper known in the art for use as a wrapper, nonwoven fabrics formed of a polymer fiber or the like; and liquid-repellent paper, which will be described later.

A material that forms the liquid-repellent layer may be a material appropriately selected from polymers, metals, inorganic oxides, and the like.

The material that forms the liquid-repellent layer may be one material used alone or may be any combination of two or more materials used in any ratio.

Examples of the polymers include polysaccharides, such as starches, cellulose, acetyl cellulose, ethyl cellulose, nitrocellulose, and gum arabic; paraffins; polyolefins, such as polyethylenes and polypropylenes; polystyrenes; polyvinyls, such as polyvinyl acetates, polyvinyl chlorides, and polyvinyl alcohols; fluororesins, such as polytetrafluoroethylenes; acrylic resins, such as poly(methyl acrylate) and poly(methyl methacrylate); natural rubbers; synthetic rubbers, such as polybutadienes; silicones, such as polydimethyl siloxanes; natural resins; alkyd resins, urethane compounds; and copolymers thereof. Among the polysaccharides, any of the celluloses, namely, cellulose, acetyl cellulose, ethyl cellulose, nitrocellulose, and the like, may be used in the form of a nanofiber, which is preferable in terms of providing high liquid repellency.

Examples of the fluororesins include resins that are similar to any of the above-described polymers such as polystyrenes, polyvinyls, acrylic resins, and silicones but are different in that a fluorine atom is substituted for a hydrogen atom of an alkenyl group or an alkyl group in the backbone or a side chain; and resins having a perfluoroalkylene group or a perfluoroalkyl group. Among these, preferred fluororesins are resins having a perfluoroalkylene group or a perfluoro-oalkyl group. The fluororesins are more preferably resins having a perfluoroalkylene group and even more preferably polytetrafluoroethylenes.

Preferably, the material that forms the liquid-repellent layer is at least one selected from the group consisting of ethyl cellulose, acrylic resins, paraffins, polyethylenes, polypropylenes, fluororesins, and silicones, among those mentioned above.

Examples of the metals include aluminum.

Examples of the inorganic oxides include silicas and aluminas.

The material that forms the liquid-repellent layer may be one or more materials that exhibit a proper liquid repellency for a liquid that leaks from the gelled additive, in particular, for a liquid having a phenol filtration capacity; the materials may be appropriately selected from the above-mentioned materials in accordance with the type of the gelled additive.

For example, when the material that forms the liquid-repellent layer that is to be used is a starch and/or aluminum, it is preferable that the liquid having a phenol filtration capacity that is included in the gelled additive be a compound that is selected from diglycerine, sorbitan monofatty acid esters, sorbitan difatty acid esters, glycerine monofatty acid esters, poly glycerine fatty acid esters, and the like and which has a surface tension greater than that of a polypropylene glycol glyceryl ether A reason for this is that since liquids having a phenol filtration capacity that have a high surface tension tend not to easily wet and spread on the surface of the wrapper, such liquids can be inhibited from leaking from the filter element.

The surface tension with respect to the liquid-repellent layer of the liquid having a phenol filtration capacity is measured with a pendant drop method (ds/de method). Specifically, the liquid having a phenol filtration capacity is pushed out from a tip of a vertically downward-facing capillary tube, and then, the surface tension is calculated from the shape of the droplet (hanging droplet) formed by the liquid having a phenol filtration capacity. The calculation uses a maximum diameter (equatorial diameter) de of the hanging droplet and a diameter ds of the hanging droplet, which is a diameter at a position higher by de than a bottom surface of the hanging droplet.

When the material that forms the liquid-repellent layer that is to be used is at least one selected from the group consisting of starches, polyvinyl alcohols, acrylic resins, fluororesins, aluminum, polypropylenes, polyethylenes, paraffins, silicones, cellulose nanofibers, ethyl cellulose, gum arabic, and nitrocellulose, it is preferable that the liquid having a phenol filtration capacity that is included in the gelled additive be a compound that is selected from polypropylene glycols, polypropylene glycol glyceryl ethers, polybutylene glycols, diglycerine, sorbitan monofatty acid esters, sorbitan difatty acid esters, glycerine monofatty acid esters, polyglycerine fatty acid esters, polyethylene glycols, caprylyl glycol, and the like and which has a spread area on the liquid-repellent layer of 35 mm$^2$ or less.

In a preferred mode of the present embodiment, the liquid-repellent layer is liquid-repellent paper. The liquid-repellent paper is paper having improved liquid resistance, which is achieved by controlling surface smoothness and density by increasing the degree of beating of the raw material and/or performing calendering. Examples of the liquid-repellent paper include Glassine paper.

It is preferable, from the standpoint of manufacturability, that the liquid-repellent layer be a layer having a uniform thickness over the entire area. Alternatively, the liquid-repellent layer may be a layer including two or more regions that have different thicknesses. The liquid-repellent layer may have any average thickness. The average thickness may be appropriately set in accordance with the type of the substrate, the type of the liquid-repellent layer, and the like.

The average thickness of the liquid-repellent layer may be 5 $\mu$m or greater and 30 $\mu$m or less. In the instance where the liquid-repellent layer is provided on a surface of a substrate, a ratio of the thickness of the liquid-repellent layer to the thickness of the substrate may be approximately 0.01 or greater and 1.0 or less.

In the instance where the liquid-repellent layer is to be formed by coating, vapor deposition, or the like of a coating material including a liquid-repellent-layer-forming material, the mentioned thickness of the liquid-repellent layer can be achieved by appropriately adjusting the amount of coating of the coating material. Smaller amounts of coating are preferable from the standpoint of manufacturing cost, provided that the liquid repellency and manufacturability are not impaired. Note that if there is an uncoated region, liquid may leak from the region, and, therefore, it is preferable that the liquid-repellent layer be formed over the entire area of the surface of the substrate.

Furthermore, in the instance where multiple filter segments are to be secured to one another with forming paper, the forming paper may be made of any material and may have any thickness, weighing amount, and the like; for example, the forming paper may be similar to the wrapper described above. A liquid-repellent layer identical to the above-described liquid-repellent layer may be provided on at least a portion of the forming paper

1-6. Phenol Filtration Capacity

The filter of the present embodiment can sufficiently remove phenols. The phenol removal performance can be evaluated by a phenol filtration capacity determined by equation (i).

$$\text{Phenol filtration capacity} = DPR1/DPR0 \qquad (i)$$

DPR1 is a value obtained by dividing an amount of a phenol or phenols present in tobacco smoke that passes through the filter by an amount of particulate matter present in the tobacco smoke that passes through the filter, the tobacco smoke being a tobacco smoke in a smoking test performed with the filter.

DPR0 is a value obtained by dividing an amount of a phenol or phenols present in tobacco smoke that passes through a reference filter by an amount of particulate matter present in the tobacco smoke that passes through the reference filter, the tobacco smoke being a tobacco smoke in a smoking test performed with the reference filter, the reference filter having the same configuration as the filter except that the reference filter does not include the gelled additive having a phenol filtration capacity.

When the value of the phenol filtration capacity of the filter of the present embodiment is low, flavor inhalation articles in which the filter is used can have a good flavor. Accordingly, the phenol filtration capacity is preferably less than or equal to 0.83, more preferably less than or equal to 0.70, even more preferably less than or equal to 0.60, and particularly preferably less than or equal to 0.50. The phenol filtration capacity of the filter of the present embodiment may have any lower limit. The lower limit is typically 0 or greater or may be 0.10 or greater, 0.20 or greater, 0.30 or greater, or 0.40 or greater.

The phenol filtration capacity determined by equation (i) is calculated in steps (1) through (8), described below.

(1) A cigarette sample is prepared by coupling the filter of the present embodiment (filter to be evaluated) to a tobacco rod with tipping paper

(2) Automatic smoking of the cigarette sample is performed in an automatic smoking machine (e.g., SM410, manufactured by Cerulean) to capture particulate matter (TPM) present in the tobacco smoke with a glass fiber filter (e.g., a Borgwaldt 44 mm$\varphi$ Cambridge filter). The conditions for the automatic smoking to be employed are, for example, a puff volume of 17.5 mL/second, a puff duration of 2 seconds/puff, a puff frequency of 1 puff/minute, and a cigarette butt length of 35 mm.

(3) The difference between the masses of the glass fiber filter, which are obtained before and after smoking, is determined as the amount of captured TPM.

(4) Phenols are extracted from the glass fiber filter after the completion of capturing, by using an extractant, such as tert-butyl methyl ether. The extract is analyzed by gas chromatograph-mass spectrometry (GC-MSD) to determine the amount of phenols present in the tobacco smoke. For the GC-MSD, the GC to be used may be, for example, an Agilent G7890A, manufactured by Agilent Technologies Inc., and the MSD to be used may be, for example, an Agilent 5795C, manufactured by Agilent Technologies Inc.

(5) The amount of phenols present in the tobacco smoke is divided by the amount of TPM to give a phenol filtration capacity for a single measurement run.

(6) Steps (1) through (5) are performed three times, and an average of the phenol filtration capacities obtained in step (5) is determined as the DPR1.

(7) Steps (1) to (6) are performed in the same manner as described above except that a reference filter is used in place of the filter of the present embodiment, the reference filter having the same configuration as the filter of the present embodiment except that the reference filter includes no gelled additive having a phenol filtration capacity. The average of the obtained filtration capacities is determined as the DPRO.

(8) The phenol filtration capacity is calculated by dividing the DPR1 obtained in step (6) by the DPRO obtained in step (7).

Note that in the steps described above, the particulate matter in the tobacco smoke that is captured by one glass fiber filter may be that of a single cigarette sample or that of a plurality of, for example, two, cigarette samples of the same type.

1-7. Method for Manufacturing Filter

The filter may be manufactured with any method, and a method known in the art may be used for the manufacture. For example, when the filter is a paper filter, the filter can be manufactured with a method in which paper obtained by subjecting wood pulp to a paper-making process is formed into a filter rod. Specifically, the paper filter can be manufactured, for example, with a step of performing a creping process or the like on pieces of paper obtained with a paper-making process, to create creped wrinkles in the pieces of paper; a step of preparing a filter element by assembling the obtained pieces of paper having a creped structure; a step of preparing a long, rod-shaped filter by wrapping the obtained filter element with a wrapper, and a step of cutting the long, rod-shaped filter into pieces having a desired length.

The gelled additive may be added to the filter element at any phase. For example, the gelled additive may be added after the step of creating creped wrinkles in the paper and before the step of preparing the long, rod-shaped filter or may be added after the step of preparing the long, rod-shaped filter.

Paper machines that can be used include those known in the art, examples of which include cylinder paper machines, inclined wire paper machines, Fourdrinier paper machines, and Tanmo paper machines. Different paper machines may be used in combination where appropriate, depending on the properties required. A dry paper-making process may also be used where appropriate. The process may be that for resin-bonded nonwoven fabrics, thermally bonded nonwoven fabrics, spunlace nonwoven fabrics, or the like.

When the filter is a filter other than a paper filter, the filter can be manufactured by forming the material into a sheet shape and thereafter following the above-described method for manufacturing a paper filter. In another method, a filter can be manufactured by assembling fibrous pieces of a material, wrapping the assembly with a wrapper to form a rod-shaped body, and cutting the formed body into pieces having a desired shape.

The addition of the gelled additive to the filter element is carried out by first preparing the gelled additive and then applying the prepared gelled additive, by means of coating or the like, to a filter element and/or paper that has not yet been formed into a filter element (hereinafter, these may be referred to simply as a "filter element" in the description below of the method for manufacturing the filter).

The gelled additive can be prepared by mixing at least two components (A) and, if necessary, one or more additives, such as a thickening agent, a flavoring agent, and a coloring agent together. The mixing may be carried out with any method. For example, a reaction vessel equipped with a stirrer or a stir bar, or a shaker may be used, and the components may all be mixed together simultaneously or may be separately mixed in any order. Furthermore, the mixing may be carried out under any conditions, which include a temperature of 50°C or greater and 120°C or less and a duration of 5 minutes or more and 1 hour or less.

Alternatively, the mixture including at least two components (A) may be added to the filter element before the gelation is complete, and, subsequently, the filter element may be cooled and held for a duration of 1 minute or more and 1 hour or less to complete the gelation.

The addition of the gelled additive to the filter element may be carried out with any method, which may be a method known in the art. Specific examples include pumping or spraying with a pressure pump; and coating with a coating roller, a brush, or the like. In the instance where a solution for forming the gelled additive is added to the filter element after the step of preparing the long, rod-shaped filter, a microsyringe may be used to add the solution for forming the gelled additive to the filter element of the long, rod-shaped filter. In the instance where the filter element that forms the filter is made up of multiple materials, the solution for forming the gelled additive may be added to one or some of the materials or to all of the materials. The solution may be added to a portion of the filter element or substantially uniformly added to the entirety.

The gelled additive may be heated before being added so that the gelled additive can be fluidized before being added to the filter element.

The solution for forming the gelled additive may be added in any amount. For example, the amount is such that the gelled additive formed by gelation can be present in an amount of 1 mg or greater and 250 mg or less per 10 mm of the filter. The " 10 mm" in the expression "per 10 mm of the filter" is 10 mm in a longitudinal direction of the filter.

2. Flavor Inhalation Article

A second embodiment of the present invention is a flavor inhalation article that includes a tobacco rod wrapped with wrapping paper and includes the filter of the first embodiment of the present invention and tipping paper that connects the tobacco rod to the filter.

In this specification, the "flavor inhalation article" is a general term that refers to inhalation articles through which users can taste flavors, such as a tobacco flavor. More specifically, examples of the flavor inhalation article include combustion-type flavor inhalation articles, which provide a flavor to users through combustion of the flavor source; non-combustion heating-type flavor inhalation articles, which provide a flavor to users through heating, not combustion, of the flavor source; and non-combustion non-heating-type flavor inhalation articles, which provide a flavor arising from the flavor source to users, with no heating or combustion of the flavor source being performed.

2-1. Tobacco Rod

The tobacco rod may be in any form known in the art and is typically in a form in which a tobacco filler is wrapped with wrapping paper. The tobacco filler may be any tobacco filler, examples of which include those known in the art, such as shredded tobacco and reconstituted tobacco sheets. In this specification, the "wrapping paper" refers to paper that wraps a tobacco filler and is to be distinguished from the wrapper, which is paper that wraps the filter element.

A water content of a typical tobacco filler, such as shredded tobacco, included in the tobacco rod may be 10 wt.% or greater and 15 wt.% or less. Preferably, the water content is 11 wt.% or greater and 13 wt.% or less. When the water content is at such a level, seepage into the wrapping paper is inhibited, which results in improved machinability associated with the manufacture of the flavor inhalation article.

Furthermore, when the flavor inhalation article is a non-combustion heating-type flavor inhalation article, the tobacco filler may include an aerosol-source material. The aerosol-source material is a source material that produces an aerosol when heated. Examples of the aerosol source material include glycerine, propylene glycol, and mixtures thereof.

The wrapping paper that wraps the tobacco filler may be made of any material, which may be a material known in the art. The material may include, for example, a filler, such as a calcium carbonate.

The wrapping paper may include a liquid-repellent layer provided on at least a portion of the wrapping paper. The liquid-repellent layer may be similar to the liquid-repellent layer that may be included in the wrapper in the filter of the first embodiment of the present invention.

2-2. Tipping Paper

The tipping paper that connects the tobacco rod to the filter may be made of any material, which may be a material known in the art. The tipping paper may include, for example, a filler, such as a calcium carbonate.

The tipping paper may include a liquid-repellent layer provided on at least a portion of the tipping paper. The liquid-repellent layer may be similar to the liquid-repellent layer that may be included in the wrapper in the filter of the first embodiment of the present invention.

In instances where at least one of the wrapping paper and the tipping paper includes a colored portion, if a liquid derived from the gelled additive seeps or leaks from the filter element during storage, an ink or the like used in the colored portion may bleed, and further, the ink that has bled may be eliminated (hereinafter, this is also referred to as "ink elimination "); as a result, the flavor inhalation article has a significantly degraded appearance. In contrast, in the flavor inhalation article of the present embodiment, the leakage of a liquid derived from the gelled additive is inhibited, and, therefore, the occurrence of ink elimination can be prevented; as a result, an excellent appearance can be maintained. Accordingly, the flavor inhalation article of the present embodiment is also suitable for use in a mode in which at least one of the wrapping paper and the tipping paper includes a colored portion.

An example of the flavor inhalation article of the present embodiment will be described below with reference to the drawings. The flavor inhalation article is not limited to the following modes and may be implemented with appropriate modifications, which may be made within the purview of the present invention.

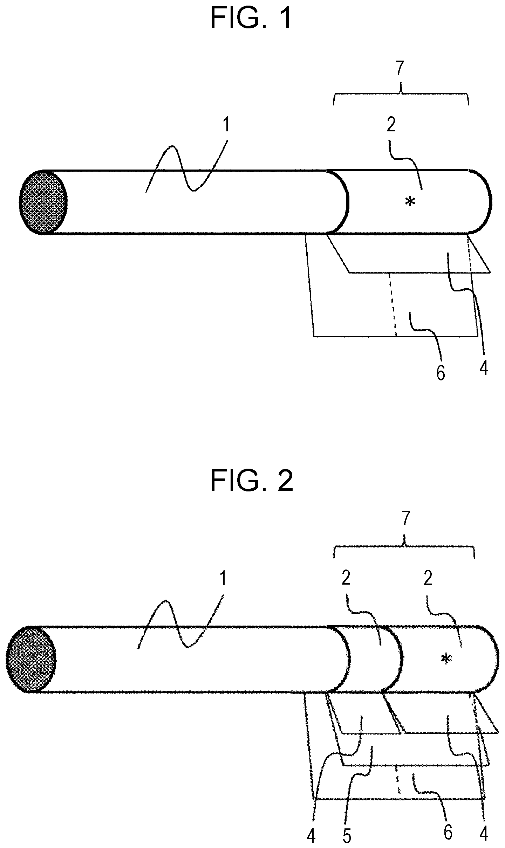

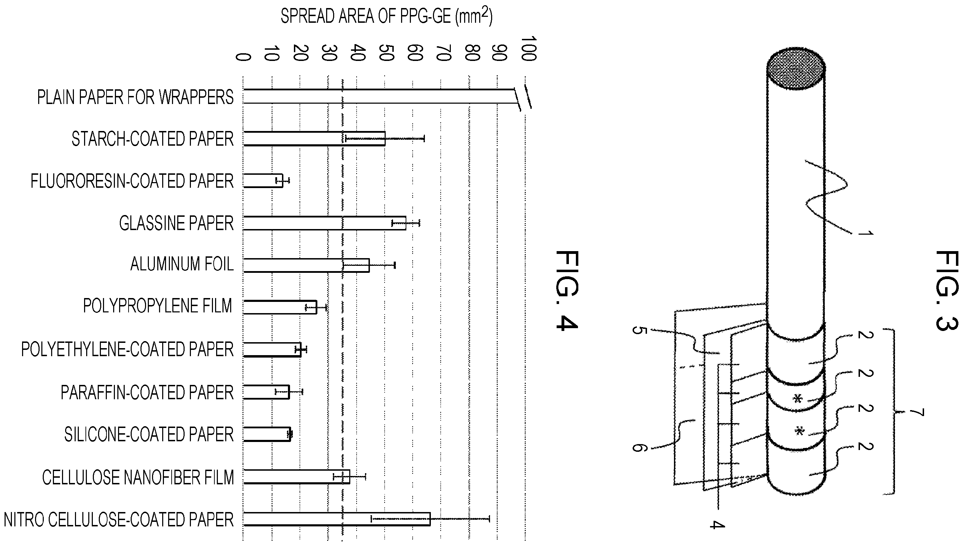

Figs. 1 to 3 are schematic diagrams of combustion-type flavor inhalation articles (cigarettes) including a filter that is a plain filter or a multi-segment filter. Referring to Fig. 1, the filter segment made of a filter element 2 is wrapped with a wrapper 4 to form a filter 7. In the case of multi-segment filters, as illustrated in Figs. 2 and 3, the filter segments are each wrapped with the wrapper 4 and collectively wrapped with forming paper 5 to form a filter 7. Each of the filters 7 is coupled to a tobacco rod 1 with tipping paper 6.

The filter of the first embodiment of the present invention can improve the flavor and inhibit the leakage of liquid even if the filter is formed of a single filter segment as illustrated in Fig. 1. That is, the filter of the first embodiment of the present invention may be contiguous with the tobacco rod. When the filter is a multi-segment filter, the gelled additive may be added only to the filter segment or filter segments, among the two or more filter segments, that are not in contact with the tobacco rod. In this case, presumably, seepage or leakage of a liquid derived from the gelled additive into the shredded tobacco and the wrapping paper that constitute the tobacco rod can be prevented more effectively.

Specifically, in a preferred mode, the gelled additive is added to one filter segment, denoted by "*", and in another preferred mode, the gelled additive is added to the filter segment that constitutes an end portion on the mouth side (Fig. 2). In the instance where three or more filter segments are present, a mode (Fig. 3) is possible in which the gelled additive is added only to the filter segment or filter segments that are not in contact with the tobacco rod or do not constitute the end portion on the mouth side, that is, only to the filter segment or filter segments that constitute a middle portion in an axial direction.

In the present embodiment, although Figs. 1 to 3 illustrate filter segments that are continuously present in the axial direction, another mode is possible in which a filter segment or filter segments other than the segment that is in contact with the mouth end of the filter are not present, that is, a gap (also referred to as a "cavity ") is present in the filter segment. The cavity can be formed with forming paper and tipping paper formed to have a cylindrical shape. In this instance, the forming paper and the like that forms the cavity may not necessarily include a liquid-repellent layer.

The tipping paper of the present embodiment may be provided with ventilation perforations for adjusting a presence ratio of mainstream tobacco smoke, which is inhaled during smoking, to air (the ventilation perforations are illustrated as dotted lines in the tipping paper denoted by 6 in Figs. 1 to 3). The ventilation perforations may be disposed in any arrangement. In some modes, the ventilation perforations may be disposed in one or two lines in a circumferential direction of a cigarette. Furthermore, the ventilation perforations may be provided at any pitch and in any perforation size and may be formed with any method. It is preferable that the ventilation perforations be disposed at positions at least 2 mm from a tobacco-rod-side end of the filter containing the gelled additive in a direction toward the tobacco rod. In this case, an improvement in the flavor can be expected. Furthermore, from the standpoint of preventing the leakage of liquid, it is preferable that the ventilation perforations not be present in a region of the tipping paper that wraps the filter containing the gelled additive or in a region of the tipping paper located between any two filter segments.

3. Package of Flavor Inhalation Articles

Typically, the flavor inhalation article is provided to users in the form of a package of flavor inhalation articles, which is prepared by packaging the flavor inhalation articles into a package. Accordingly, a third embodiment of the present invention is a package of flavor inhalation articles, in which the flavor inhalation articles, which are identical to the flavor inhalation article of the second embodiment, are enclosed in an enclosing wrapper. The flavor inhalation articles are wrapped directly in the enclosing wrapper, and the enclosing wrapper includes a liquid-repellent layer provided at least in a region that is in contact with the filter of the flavor inhalation articles. In particular, it is preferable that the liquid-repellent layer be provided on a portion of the enclosing wrapper that is in contact with end surfaces on the mouth side of the filters.

In the present embodiment, since the additive added to the filter element of the filter of the flavor inhalation article is in a gelled form, leakage of liquid from the filter element is unlikely to occur. Accordingly, a reduced probability of diffusion of liquid within the package of flavor inhalation articles can be expected. Furthermore, the presence of the liquid-repellent layer provided in a region of the enclosing wrapper that is in contact with the filter of the flavor inhalation article prevents liquid that has leaked from the filter element from wetting and spreading on the surface of the enclosing wrapper, and as a result, diffusion of liquid within the package can be prevented.

The package for packaging the flavor inhalation articles of the present embodiment may have any shape and volume. Any existing package may be used.

The package may have a volume that is in any preferred range. For example, the volume is 30 cm$^3$ or greater and 150 cm$^3$ or less.

The number of flavor inhalation articles that are packaged into the package is typically 20 and may be changed where appropriate, to suit a shape and size of the package.

The enclosing wrapper may be formed of only a liquid-repellent layer or may include a substrate and the liquid-repellent layer disposed on a surface of the substrate.

In the instance where the wrapper includes a substrate and the liquid-repellent layer disposed on a surface of the substrate, the wrapper may be one in which a layer of a coating material including a liquid-repellent-layer-forming material has been applied to the surface of the substrate by means of coating, vapor deposition, or the like. The substrate may be any material, examples of which include paper known in the art for use as a wrapper; nonwoven fabrics formed of a polymer fiber or the like; and liquid-repellent paper.

Examples of a material that forms the liquid-repellent layer provided on the enclosing wrapper include the material that forms the liquid-repellent layer that may be present on the wrapper of the filter of the first embodiment of the present invention. Preferred modes of the material that forms the liquid-repellent layer are also similar to those of the first embodiment. In a preferred mode, the liquid-repellent layer is liquid-repellent paper. In the instance where the wrapper of the filter includes a liquid-repellent layer, the liquid-repellent layer may be formed of the same material as that of the liquid-repellent layer included in the enclosing wrapper, or the former liquid-repellent layer may be formed of a material different from that of the latter liquid-repellent layer.

EXAMPLES

The present invention will be described in more detail with reference to Examples. The present invention is not limited to the descriptions of the Examples below as long as the purview of the present invention is not exceeded.

<Liquid Spread Test>

In a room at a temperature of 22°C and a humidity of 60% RH, 10 mg of a liquid having a phenol filtration capacity was dropped with a microsyringe onto test materials. After 30 minutes, the spread area of the droplets was measured. In the test, a polypropylene glycol glyceryl ether (PPG-GE, weight average molecular weight: 4,000) and a diglycerine were used as liquids having a phenol filtration capacity. The test materials used were plain paper for wrappers and commercially available different types of paper, namely, starch-coated paper, fluororesin-coated paper (the fluororesin contained a perfluoroalkyl group), Glassine paper (manufactured by Yoshiyo Kobo Co., Ltd.), aluminum foil (manufactured by MAAluminum Co., Ltd.), a polypropylene film (manufactured by Seisannipponsha Ltd.), polyethylene-coated paper (manufactured by Fukusuke Kogyo Co., Ltd.), paraffin-coated paper (manufactured by Kojima Shojikido Honpo), silicone-coated paper (manufactured by Nippon Paper Crecia Co., Ltd.), a cellulose nanofiber film (manufactured by Chuetsu Pulp & Paper Co., Ltd.), nitro cellulose-coated paper, ethyl cellulose-coated paper, acrylic resin-coated paper, polyvinyl alcohol-coated paper, and gum arabic-coated paper. Note that the droplets began to stopped on the test material immediately after the start of dropping; however, after 30 minutes, the spread of the droplets was stable in all the cases except the case with the plain paper

The area on the test material over which the droplets spread was calculated by image processing. The measurement of the spread of the droplets was carried out with a VHX-100 digital microscope, manufactured by Keyence Corporation. The magnification of the digital microscope was set to be 5×. The focal point was adjusted to be at a level such that a reference scale can be clearly discerned. The calibration of the device was carried out over a range of 10 mm of the reference scale by specifying the length using accompanying software. 10 mg of the additive was dropped onto pieces of approximately 3 cm square of the test materials, and after 30 minutes, by which time the spread had become stable, the test materials were photographed with the digital microscope from an upper side. For this, the level of the illumination light was adjusted such that the outer periphery of the additive droplets resulting from the dropping could be clearly identified visually. In the images, the outer periphery of the additive droplets was precisely specified by selecting a "Measurement-Manual-Polygon mode" in the accompanying software, to calculate the spread area.

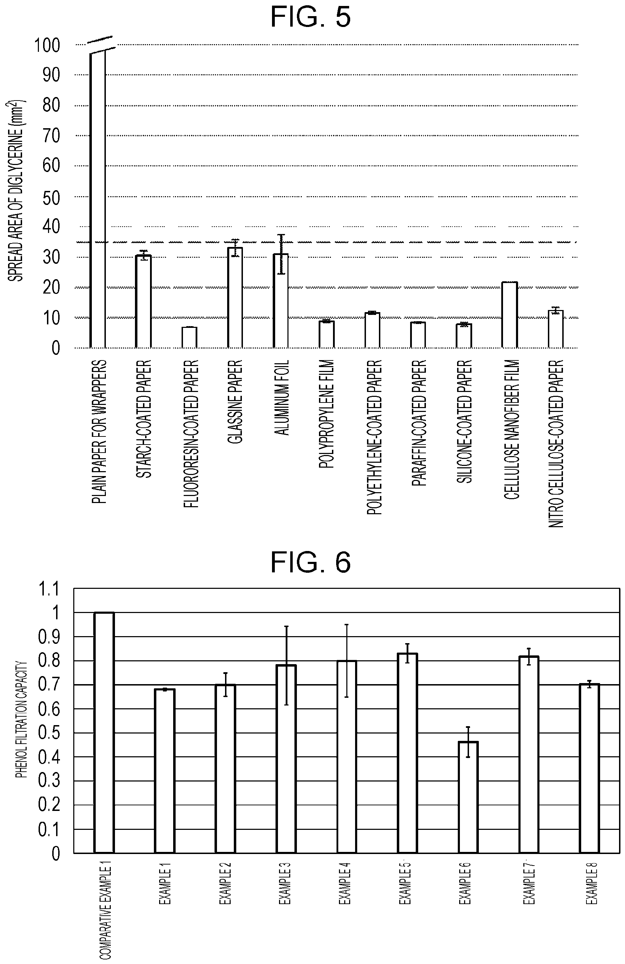

The measurement was performed three times, and an average of the spread areas and a 95% confidence interval (95% C.I.) that were obtained are shown in Table 1. The result of the use of a PPG-GE is shown in Fig. 4, and the result of the use of a diglycerine is shown in Fig. 5. The dashed line in Figs. 4 and 5 represents the level of a spread area of 36.3 mm$^2$ (which is a result of a run of all the three runs of the spread test for the PPG-GE performed with starch-coated paper; the run was one in which the spread area was the smallest).

As is apparent from Table 1 and Figs. 4 and 5, in the case of the test materials including a layer that was liquid repellent, the spread of liquid was significantly inhibited.

Table 1

|  | PPG-GE | | Diglycerine | |
|---|---|---|---|---|
|  | Spread area (mm2) | 95%C.I. | Spread area (mm$^2$) | 95%C.I. |
| Plain paper for wrappers | 269 | 72 | 353 | 23 |
| Starch-coated paper | 50 | 14 | 31 | 2 |
| Fluororesin-coated paper | 14 | 2 | 7 | 0 |
| Glassine paper | 58 | 5 | 33 | 3 |
| Aluminum foil | 45 | 9 | 31 | 6 |
| Polypropylene film | 26 | 4 | 9 | 0 |
| Polyethylene-coated paper | 20 | 2 | 12 | 0 |
| Paraffin-coated paper | 16 | 5 | 8 | 0 |

(continued)

| | PPG-GE | | Diglycerine | |
|---|---|---|---|---|
| | Spread area (mm2) | 95%C.I. | Spread area (mm$^2$) | 95%C.I. |
| Silicone-coated paper | 16 | 1 | 8 | 1 |
| Cellulose nanofiber film | 38 | 6 | 22 | 0 |
| Nitro cellulose-coated paper | 66 | 21 | 12 | 1 |
| Ethyl cellulose-coated paper | 25 | 5 | 10 | 0 |
| Acrylic resin-coated paper | 22 | 2 | 9 | 1 |
| Polyvinyl alcohol-coated paper | 92 | 47 | 18 | 5 |
| Gum arabic-coated paper | 83 | 18 | 36 | 15 |

<Ink Effects Test>

10 mg of a liquid having a phenol filtration capacity, which will be described below, and 10 mg of a triacetin, which is a phenol scavenger known in the art, were each dropped with a microsyringe onto a printed side of tipping paper having cork-like printing. When 1 minute had elapsed, the liquid was wiped off with a Kimwipe S-200 paper wiper, manufactured by Nippon Paper Crecia Co., Ltd., and a degree of ink elimination that resulted was assessed on a 4-point scale of A to D, shown below. The results are shown in Table 2 below.

A: Substantially no visible ink elimination occurred, and the appearance remained unimpaired.
B: A slight degree of ink elimination occurred, but the appearance was not substantially impaired.
C: Ink elimination occurred, and the appearance was impaired.
D: A significant degree of ink elimination occurred, and the appearance was significantly impaired.

The liquids having a phenol filtration capacity used were a polyethylene glycol (weight average molecular weight: 600), polypropylene glycols (weight average molecular weight: 700, 1,000, 2,000, and 3,000), polypropylene glycol glyceryl ethers (weight average molecular weight: 500, 1,000, 3,000, and 4,000), polybutylene glycols (weight average molecular weight: 500 and 700), a diglycerine, and a caprylyl glycol.

Table 2

| | Degree of ink elimination |
|---|---|
| Triacetin | D |
| Polyethylene glycol (molecular weight: 600) | D |
| Polypropylene glycol (molecular weight: 700) | C |
| Polypropylene glycol (molecular weight: 1000) | B |
| Polypropylene glycol (molecular weight: 2000) | A |
| Polypropylene glycol (molecular weight: 3000) | A |
| Polypropylene glycol glyceryl ether (molecular weight: 500) | C |
| Polypropylene glycol glyceryl ether (molecular weight: 1000) | B |
| Polypropylene glycol glyceryl ether (molecular weight: 3000) | A |
| Polypropylene glycol glyceryl ether (molecular weight: 4000) | A |
| Polybutylene glycol (molecular weight: 500) | B |
| Polybutylene glycol (molecular weight: 700) | B |
| Diglycerine | A |
| Caprylyl glycol | A |

As shown in Table 2, different liquids having a phenol filtration capacity had different effects on ink elimination. Furthermore, regarding the polymers, it was found that liquids having higher degrees of polymerization (higher weight average molecular weights) had smaller effects on ink elimination. It was also found that even if the liquid having a phenol filtration capacity leaked from the gelled additive, seepage or leakage of the liquid from the filter element of the filter could be sufficiently inhibited. In addition, it was confirmed that even if, during manufacture, a slight amount of the liquid having a phenol filtration capacity used in the gelled additive happens to be present on wrapping paper and/or tipping paper that have a colored portion, it is possible to inhibit the impairment of the appearance of the flavor inhalation article due to ink elimination, provided that the liquid having a phenol filtration capacity is selected from polypropylene glycols having a weight average molecular weight of 1,000 or greater, polypropylene glycol glyceryl ethers having a weight average molecular weight of 1,000 or greater, polybutylene glycols having a weight average molecular weight of 500 or greater, diglycerine, and caprylyl glycol.

<Test of Phenol Filtration Capacity>

(Preparation of Cigarette Samples)

A paper filter with a length of 27 mm and a diameter of 7.7 mm was prepared. Specifically, first, paper (basis weight: 40 g/m$^2$) with creped wrinkles was folded so as to form therein multiple air flow paths each extending from one end to the other, and the resultant was wrapped with plain paper for wrappers and subsequently cut to have a length of 120 mm. In this manner, a filter rod was prepared. The draw resistance of the filter rod was adjusted to be 400 mm H$_2$O, and the diameter of the filter to be 7.7 mmcp. The filter rod was cut to form a piece having a length of 27 mm. This piece was used as a paper filter of Comparative Example 1, which included no gelled additive added thereto.

Mixtures containing the components shown in Table 3 were added to respective paper filters with a microsyringe in a state in which the mixtures were heated at 90°C, the respective paper filters being identical to the paper filter of Comparative Example 1. Subsequently, the resultants were stored at room temperature for 2 days or more so that the distribution of the additives in the filters was stabilized. The resulting paper filters were used as paper filters of Examples 1 to 8, which contained a gelled additive.

Table 3

| | Component 1 | | Component 2 | | Component 3 | | Amount of addition (mg) |
|---|---|---|---|---|---|---|---|
| | Name of component | Parts by mass | Name of component | Parts by mass | Name of component | Parts by mass | |
| Example 1 | Polypropylene glycol glyceryl ether (Mw: 4,000) | 100 | Stearic acid | 10 | - | - | 15 |
| Example 2 | Polypropylene glycol glyceryl ether (Mw: 4,000) | 100 | Myristic acid | 30 | - | - | 15 |
| Example 3 | Polypropylene glycol glyceryl ether (Mw: 4,000) | 100 | Hydrogenated rapeseed oil | 10 | - | - | 15 |
| Example 4 | Polypropylene glycol glyceryl ether (Mw: 4,000) | 100 | Hydrogenated rapeseed oil | 5 | - | - | 15 |
| Example 5 | Decaglycerine monolaurate | 100 | Hydrogenated rapeseed oil | 10 | - | - | 15 |
| Example 6 | Triacetin | 100 | Glycerine fatty acid ester | 5 | - | - | 25 |
| Example 7 | Linoleic acid | 100 | Polyglycerine octastearate | 2.5 | Glycerine behenate | 2.5 | 25 |
| Example 8 | Ethyl linoleate | 100 | Polyglycerine octastearate | 2.5 | Glycerine behenate | 2.5 | 25 |

Subsequently, tobacco rods of Winston cigarettes, which are commercially available cigarettes, were coupled to the paper filters to form cigarette samples of Examples 1 to 8 and Comparative Example 1.

(Smoking Test)

A smoking test and analysis were conducted on each of the cigarette samples of Examples 1 to 8 and Comparative Example 1 under the following conditions.

Automatic smoking of the cigarette samples was performed in an automatic smoking machine (SM410, manufactured by Cerulean) under conditions of a puff volume of 17.5 mL/second, a puff duration of 2 seconds/puff, a puff frequency of 1 puff/minute, and a cigarette butt length of 35 mm, and particulate matter (TPM) present in the tobacco smoke was captured with a Cambridge filter (Borgwaldt 44 mmφ). The amount of TPM was measured by determining the difference between the masses of the Cambridge filter obtained before and after smoking. Subsequently, the Cambridge filter was immersed in 10 mL of a phenol extractant, shown in Table 4, contained in a screw-top vial, and then, the vial was shaken. Thus, an analysis sample was obtained. 1 μL of the obtained analysis sample was taken with a microsyringe and analyzed by gas chromatograph-mass spectrometry (GC-MSD: Gas Chromatography-Mass Selective Detector). The GC used was an Agilent G7890A, manufactured by Agilent Technologies Inc., and the MSD used was an Agilent 5795C, manufactured by Agilent Technologies Inc.

Table 4

|  | Compound | Concentration |
|---|---|---|
| Solvent | *t*-butyl methyl ether | - |
| Internal standard | *o*-chlorophenol | 10.7 μg/mL |

In the manner described above, the amount of TPM per cigarette sample and an amount of the phenol present in the tobacco smoke generated from one cigarette sample were measured for each of the cigarette samples. A value was obtained by dividing the amount of the phenol present in the tobacco smoke generated from one cigarette sample by the amount of TPM per cigarette sample. A relative value of the value was determined based on the value of the cigarette sample of Comparative Example 1, which was taken as 1. The phenol filtration capacity of the paper filters of Examples 1 to 8 was evaluated with the relative values. An average of three evaluation results are shown in Table 5, and the average and a standard deviation are shown in Fig. 6.

Table 5

|  | Phenol filtration capacity |
|---|---|
| Example 1 | 0.68 |
| Example 2 | 0.70 |
| Example 3 | 0.78 |
| Example 4 | 0.80 |
| Example 5 | 0.83 |
| Example 6 | 0.46 |
| Example 7 | 0.82 |
| Example 8 | 0.70 |

As is apparent from Table 5 and Fig. 6, filters containing a gelled additive had a filtration capacity for a phenol (Examples 1 to 8). Furthermore, it can be seen that filters exhibiting a particularly high phenol filtration capacity were obtained in the instance where a polypropylene glycol glyceryl ether (weight average molecular weight: 4,000), which is a component having a phenol filtration capacity, was combined with a triacetin, such as stearic acid or myristic acid, or with hydrogenated rapeseed oil or in the instance where a triacetin was used as a component having a phenol filtration capacity (Examples 1 to 3 and 6).

<Sensory Evaluation of Flavor>

A sensory evaluation was performed to evaluate the flavor of the cigarettes to which the gelled additive had been added.

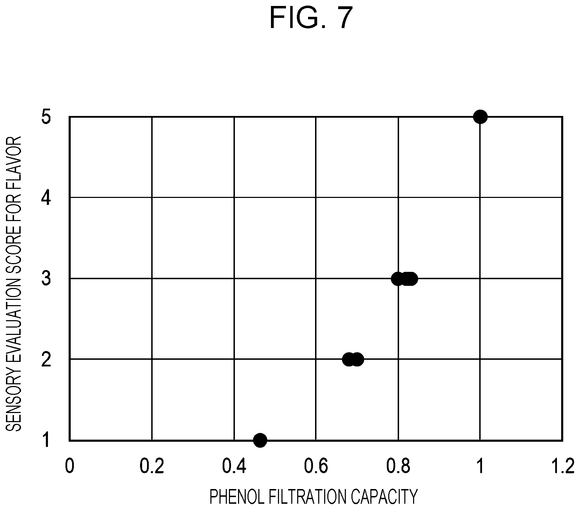

Specifically, three panelists trained to perform a flavor evaluation smoked the cigarette samples of Comparative Example 1 and Examples 1, 2, and 4 to 7, which were prepared as described above in the <Test of Phenol Filtration Capacity> section. The panelists evaluated the flavor (stimulus) of the cigarette samples of the Examples and the Comparative Example based on the scoring criteria shown below. The scores of the three panelists were averaged, and the result was rounded to the nearest whole number, which was designated as the score of the sensory evaluation of each of the cigarette samples. The results of the evaluation are shown in Table 6. In addition, a relationship between the phenol filtration capacity and the sensory evaluation scores for flavor is shown in Fig. 7.

(Scoring Criteria)

1: No stimulus was felt.
2: Stimulus was considerably reduced compared to the cigarette sample of Comparative Example 1.
3: Stimulus was reduced compared to the cigarette sample of Comparative Example 1.
4: Stimulus was somewhat reduced compared to the cigarette sample of Comparative Example 1.
5: Stimulus comparable to that of the cigarette sample of Comparative Example 1 was felt.

Table 6

|  | Sensory evaluation scores for flavor |
|---|---|
| Example 1 | 2 |
| Example 2 | 2 |
| Example 4 | 3 |
| Example 5 | 3 |
| Example 6 | 1 |
| Example 7 | 3 |
| Comparative Example 1 | 5 |

As is apparent from Fig. 7, when the phenol filtration capacity of the cigarette sample containing a gelled additive added thereto was less than or equal to 0.83, stimulus was reduced, and when the phenol filtration capacity was less than or equal to 0.70, stimulus was further reduced.

Reference Signs List

1    tobacco rod
2    filter element
4    wrapper
5    forming paper
6    tipping paper
7    filter

**Claims**

1.   A filter for a flavor inhalation article, the filter comprising:

a filter element including a biodegradable material; and

a wrapper that wraps the filter element, wherein
the filter element contains a gelled additive having a phenol filtration capacity.

2. The filter according to claim 1, wherein

the gelled additive having a phenol filtration capacity contains at least two compounds selected from the group consisting of polyethylene glycols, polypropylene glycols, polybutylene glycols, polyethylene glycol sorbitan fatty acid esters, polypropylene glycol glyceryl ethers, polyglycerine fatty acid esters, propylene glycol, diglycerine, caprylyl glycol, propylene glycol fatty acid esters, glycerine fatty acid esters, sorbitan fatty acid esters, sucrose fatty acid esters, triethyl citrate, fatty acids, fatty acid alkyl esters, phospholipids, hydroxy fatty acids, and hydrogenated rapeseed oils, and
at least one of the at least two compounds is a component having a phenol filtration capacity selected from the group consisting of polyethylene glycols, polypropylene glycols, polybutylene glycols, polyethylene glycol sorbitan fatty acid esters, polypropylene glycol glyceryl ethers, polyglycerine fatty acid esters, propylene glycol, diglycerine, caprylyl glycol, propylene glycol fatty acid esters, glycerine fatty acid esters, sorbitan fatty acid esters, sucrose fatty acid esters, triethyl citrate, fatty acids, fatty acid alkyl esters, and phospholipids.

3. The filter according to claim 2, wherein the polypropylene glycols have a weight average molecular weight of 2,000 or greater and 4,000 or less, and the polypropylene glycol glyceryl ethers have a weight average molecular weight of 3,000 or greater and 4,000 or less.

4. The filter according to claim 2, wherein the component having a phenol filtration capacity is at least one selected from the group consisting of the polypropylene glycol glyceryl ethers, the polyglycerine fatty acid esters, the glycerine fatty acid esters, the fatty acids, and the fatty acid alkyl esters.

5. The filter according to any one of claims 1 to 4, wherein the wrapper includes a liquid-repellent layer in a region that is in contact with the filter element.

6. The filter according to claim 5, wherein a spread area of the component having a phenol filtration capacity, which is a spread area on the liquid-repellent layer, is less than or equal to 35 mm$^2$.

7. The filter according to claim 5 or 6, wherein the wrapper further includes a substrate, and the liquid-repellent layer is disposed on a surface of the substrate.

8. The filter according to any one of claims 5 to 7, wherein the liquid-repellent layer includes at least one selected from the group consisting of starches, polyvinyl alcohols, acrylic resins, fluororesins, aluminum, polypropylenes, polyethylenes, paraffins, silicones, cellulose nanofibers, ethyl cellulose, gum arabic, and nitrocellulose.

9. The filter according to any one of claims 5 to 7, wherein the liquid-repellent layer includes at least one selected from the group consisting of ethyl cellulose, acrylic resins, paraffins, polyethylenes, polypropylenes, fluororesins, and silicones.

10. The filter according to any one of claims 5 to 7, wherein the liquid-repellent layer is liquid-repellent paper.

11. The filter according to any one of claims 1 to 10, wherein the filter has a phenol filtration capacity of less than or equal to 0.83 as determined by equation (i):

$$\text{phenol filtration capacity} = DPR1/DPR0 \qquad (i)$$

where DPR1 is a value obtained by dividing an amount of a phenol present in tobacco smoke that passes through the filter by an amount of particulate matter present in the tobacco smoke that passes through the filter, the tobacco smoke being a tobacco smoke in a smoking test performed with the filter, and
DPRO is a value obtained by dividing an amount of a phenol present in tobacco smoke that passes through a reference filter by an amount of particulate matter present in the tobacco smoke that passes through the reference filter, the tobacco smoke being a tobacco smoke in a smoking test performed with the reference filter, the reference filter having the same configuration as the filter except that the reference filter does not include the gelled additive having a phenol filtration capacity.

12. A flavor inhalation article comprising:

   a tobacco rod wrapped with wrapping paper;
   the filter according to any one of claims 1 to 11; and
   tipping paper connecting the tobacco rod to the filter.

13. The flavor inhalation article according to claim 12, wherein at least one of the wrapping paper and the tipping paper includes a colored portion.

14. A package of flavor inhalation articles in which the flavor inhalation articles are enclosed in an enclosing wrapper, wherein

   the flavor inhalation articles are identical to the flavor inhalation article according to claim 12 or 13,
   the flavor inhalation articles are wrapped directly in the enclosing wrapper, and
   the enclosing wrapper includes a liquid-repellent layer provided at least in a region that is in contact with the filter.

15. The package of flavor inhalation articles according to claim 14, wherein the liquid-repellent layer provided on the enclosing wrapper includes at least one selected from the group consisting of starches, polyvinyl alcohols, acrylic resins, fluororesins, aluminum, polypropylenes, polyethylenes, paraffins, silicones, cellulose nanofibers, ethyl cellulose, gum arabic, and nitrocellulose.

16. The package of flavor inhalation articles according to claim 14, wherein the liquid-repellent layer provided on the enclosing wrapper includes at least one selected from the group consisting of ethyl cellulose, acrylic resins, paraffins, polyethylenes, polypropylenes, fluororesins, and silicones.

17. The package of flavor inhalation articles according to claim 14, wherein the liquid-repellent layer provided on the enclosing wrapper is liquid-repellent paper

EP 4 449 902 A1

# FIG. 1

# FIG. 2

# FIG. 3

# FIG. 4

# FIG. 5

# FIG. 6

# FIG. 7

## INTERNATIONAL SEARCH REPORT

| International application No. |
| --- |
| **PCT/JP2022/045636** |

### A. CLASSIFICATION OF SUBJECT MATTER

***A24D 3/14***(2006.01)i
FI: A24D3/14

According to International Patent Classification (IPC) or to both national classification and IPC

### B. FIELDS SEARCHED

Minimum documentation searched (classification system followed by classification symbols)

A24D1/00-3/18; A24F40/00-47/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | CN 106690415 A (YUNNAN BAGU BIOLOGICAL TECHNOLOGY CO., LTD.) 24 May 2017 (2017-05-24)<br>paragraphs [0010]-[0037] | 1-17 |
| Y | JP 2020-036534 A (JAPAN TOBACCO INC.) 12 March 2020 (2020-03-12)<br>paragraphs [0003], [0004], [0015]-[0018], [0026] | 1-17 |
| Y | WO 2013/021863 A1 (JAPAN TOBACCO INC.) 14 February 2013 (2013-02-14)<br>paragraphs [0013], [0036] | 5-17 |
| Y | JP 3910175 B2 (JAPAN TOBACCO INC.) 25 April 2007 (2007-04-25)<br>paragraphs [0029]-[0032] | 11-17 |
| Y | CN 102048239 A (LIU, Jianghong) 11 May 2011 (2011-05-11)<br>paragraphs [0008]-[0017] | 14-17 |

☐ Further documents are listed in the continuation of Box C.  ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **11 January 2023** | **31 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/045636**

| Patent document cited in search report | | | Publication date (day/month/year) | Patent family member(s) | | | Publication date (day/month/year) |
|---|---|---|---|---|---|---|---|
| CN | 106690415 | A | 24 May 2017 | (Family: none) | | | |
| JP | 2020-036534 | A | 12 March 2020 | WO<br>TW | 2018/101201<br>201826950 | A1<br>A | |
| WO | 2013/021863 | A1 | 14 February 2013 | EP<br>paragraphs [0013], [0033]<br>CN<br>KR<br>TW | 2740370<br><br>103702577<br>10-2014-0029536<br>201318571 | A1<br><br>A<br>A<br>A | |
| JP | 3910175 | B2 | 25 April 2007 | US<br>paragraphs [0036]-[0040]<br>EP<br>WO<br>CN | 2004/0200490<br><br>1442667<br>03/037114<br>1578631 | A1<br><br>A1<br>A1<br>A | |
| CN | 102048239 | A | 11 May 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018008608 A
- JP 2013526272 W
- WO 2021001961 A